# EUROPÄISCHE PATENTANMELDUNG

(11) **EP 0 923 981 A2**
(43) Veröffentlichungstag der Anmeldung: **23.06.1999**
(21) Anmeldenummer: 98122920.6
(22) Anmeldetag: 02.12.1998
(51) Int. Cl.: B01D 53/94, B01J 23/62

(54) **Oxydationskatalysator für Verbrennungsmotoren**

(30) Priorität: 17.12.1997 DE 19756144
(71) Anmelder: Degussa Aktiengesellschaft, 60311 Frankfurt (DE)
(72) Erfinder: Klein, Harald Dr., 63856 Bessenbach (DE); van den Tillaart, Hans Dr., 63579 Freigericht (DE); Eckhoff, Stephan, 31515 Wunstorf (DE); Lox, Egbert Dr., 63457 Hanau (DE); Kreuzer, Thomas Dr., 61184 Karben (DE)

(57) **Zusammenfassung**

Die Erfindung betrifft einen Oxidationskatalysator, welcher auf einem feinteiligen Trägermaterial Platin enthält. Durch Promotieren des Katalysators mit Blei in einem Molverhältnis von Blei zu Platin von 2:1 kann die katalytische Aktivität des Oxidationskatalysators um eine Mehrfaches gesteigert werden. Die Anspringtemperaturen des promotierten Katalysators liegen deutlich unter den entsprechenden Temperaturen des konventionellen, bleifreien Katalysators.

## Beschreibung

Die vorliegende Erfindung betrifft einen Oxidationskatalysator für Verbrennungsmotoren, der auf einem feinteiligen Trägermaterial Platin als katalytisch aktive Komponente enthält.

Für die Abgasreinigung von Verbrennungsmotoren werden Katalysatoren eingesetzt, die als katalytisch aktive Komponenten überwiegend Edelmetalle der Platingruppe des periodischen Systems der Elemente enthalten. Man unterscheidet Oxidationskatalysatoren, Reduktionskatalysatoren und sogenannte Dreiwegkatalysatoren.

Das Abgas von Verbrennungsmotoren enthält im wesentlichen drei Schadstoffe, nämlich Kohlenmonoxid, unverbrannte Kohlenwasserstoffe und Stickoxide. Bei den Stickoxiden handelt es sich um ein Gemisch verschiedener Oxidationsstufen des Stickstoffs. Zu etwa 90 Vol.-% besteht dieses Gemisch aus Stickstoffmonoxid. Der Rest besteht hauptsächlich aus Stickstoffdioxid.

Dreiwegkatalysatoren sind in der Lage, alle drei Schadstoffe gleichzeitig zu den unschädlichen Verbindungen Kohlendioxid, Wasser und Stickstoff umzusetzen. Voraussetzung hierfür ist, daß der Verbrennungsmotor mit einem Luft/Kraftstoffverhältnis nahe dem stöchiometrischen Luft/Kraftstoffverhältnis betrieben wird. Das stöchiometrische Luft/Kraftstoffverhältnis hat bei üblichen Motorkraftstoffen den Wert von 14,6 Kilogramm Luft pro Kilogramm Kraftstoff. Bei der gleichzeitigen Umsetzung der drei Schadstoffe wirken Kohlenmonoxid und Kohlenwasserstoffe als Reduktionsmittel für die Stickoxide. Dreiwegkatalysatoren enthalten als wesentliche Komponente neben Platin und/oder Palladium noch Rhodium. Wobei Rhodium zur Fähigkeit des Katalysators beiträgt, die Stickoxide zu reduzieren.

Oxidationskatalysatoren enthalten als katalytisch aktive Komponenten im wesentlichen Platin und/oder Palladium. Sie können im sauerstoffreichen Abgas die unverbrannten Abgaskomponenten mit hohem Wirkungsgrad oxidieren und so in unschädliche Stoffe umwandeln.

Die Edelmetallkatalysatoren zeigen eine ausgeprägte Temperaturabhängigkeit ihrer katalytischen Aktivität. Bei Umgebungstemperatur sind sie nur wenig aktiv und können daher während der Kaltstartphase der Verbrennungsmotoren die Schadstoffe nur unvollständig umsetzen. Mit steigender Abgastemperatur nimmt die Aktivität der Katalysatoren zu. Als Anspringtemperatur eines Katalysators wird diejenige Abgastemperatur bezeichnet, bei der der Katalysator gerade 50% eines Schadstoffes umsetzt. Die Anspringtemperatur eines Katalysators kann für jeden Schadstoff einen anderen Wert aufweisen. Bei Erreichen ihrer Betriebstemperatur, die je nach Katalysatortyp zwischen 300 und 500°C liegen kann, setzen die bekannten Katalysatoren die Schadstoffe mit Wirkungsgraden von mehr als 70% um.

Moderne Diesel- und Benzinmotoren arbeiten zur Verminderung des Kraftstoffbedarfs mit einem hohen Luftüberschuß bei Luft/Kraftstoffverhältnissen von mehr als 18. Im Teillastbereich weisen diese Motoren Abgastemperaturen von unter 200°C auf. Für die Abgasreinigung dieser Motoren werden daher Katalysatoren mit einer möglichst geringen Anspringtemperatur und einer hohen katalytischen Aktivität auch schon bei Temperaturen unter 200°C benötigt. Dies wird heute vorwiegend durch sehr hohe Edelmetallbeladungen erreicht. Bevorzugt wird Palladium eingesetzt, welches neben einem geringeren Preis gegenüber Platin auch eine bessere Oxidationsaktivität aufweist.

Aufgabe der vorliegenden Erfindung ist es, einen Katalysator zur Verfügung zu stellen, der bei einer geringen Edelmetallbeladung eine sehr niedrige Anspringtemperatur und eine hohe katalytische Aktivität besitzt.

Diese Aufgabe wird durch einen Oxidationskatalysator gelöst, welcher auf einem feinteiligen Trägermaterial Platin enthält. Der Katalysator ist dadurch gekennzeichnet, daß er als zusätzlichen Promotor Blei in einem Molverhältnis zu Platin von 0,5:1 bis 3:1 enthält.

Blei ist im allgemeinen als Katalysatorgift bekannt. Um so überraschender war die Feststellung, daß es in der Lage ist die katalytische Aktivität von Platin um ein Mehrfaches zu steigern. Es wurden katalytische Aktivitäten gemessen, die ohne Blei nur mit einem sechsfachen Edelmetallgehalt erreichbar waren.

Bevorzugt wird der Katalysator, wie bei der Autoabgasreinigung üblich, als Beschichtungskatalysator auf einem inerten Tragkörper eingesetzt. Geeignete Tragkörper sind die sogenannten Wabenkörper aus Keramik oder Metall mit parallelen Strömungskanälen für das Abgas. Der Katalysator wird durch bekannte Verfahren auf den Innenwänden dieser Strömungskanäle in Konzentrationen von 50 bis 600 g/l Tragkörpervolumen abgeschieden.

Der Katalysator kann auf verschiedene Weise hergestellt werden. So besteht die Möglichkeit, zunächst das feinteilige Trägermaterial zu einer wäßrigen Beschichtungsdispersion zu verarbeiten und damit den Tragkörper zu beschichten. Nach Trocknen und Kalzinieren der Beschichtung können Platin und Blei durch Imprägnieren des beschichteten Tragkörpers mit löslichen Vorstufen dieser Elemente in die Beschichtung eingebracht werden. Dabei kann die Imprägnierung mit beiden Elementen gleichzeitig unter Verwendung einer gemeinsamen Imprägnierlösung oder in beliebiger Reihenfolge nacheinander mit zwei getrennten Imprägnierlösungen erfolgen. Nach der Imrägnierung wird der Katalysatorkörper erneut getrocknet und kalziniert.

Bevorzugt wird das Trägermaterial jedoch vor dem Aufbringen auf den Tragkörper mit den katalytischen Komponenten beschichtet. Hierzu wird das Pulvermaterial in einem Kessel umgewälzt und dabei gleichzeitig mit der Imprägnierlösung besprüht. Gemäß dem Prinzip der Porenvolumenimprägnierung wird dabei das Lösungsvolumen auf einen Wert zwischen 70 und 90% der Aufnahmekapazität des Trägermaterials eingestellt. Nach dem thermischen Fixieren der katalytischen Komponenten auf dem Trägermaterial (Trocknen und Kalzinieren) wird es in Wasser dispergiert und damit der Tragkörper beschichtet. Platin und Blei können gleichzeitig auf das Trägermaterial aufgebracht werden. Es besteht jedoch auch die Möglichkeit, zunächst nur Platin auf dem Trägermaterial abzuscheiden und das Blei erst nach Beschichtung des Tragkörpers durch Imprägnieren in die Beschichtung einzubringen.

Als Vorstufen für Platin können die bekannten Platinverbindungen wie Hexachloroplatinsäure, Platinnitrat, Platin(IV)-Chlorid, Tetraamminplatin(II)-nitrat, Tetraamminplatin(II)-hydroxid, sowie mit Ethanolamin oder Methanolamin komplexierte Hexahydroxoplatin(IV)-säure eingesetzt werden. Zur Imprägnierung mit Blei wird bevorzugt Bleiacetat verwendet.

Die folgenden Beispiele sollen die Erfindung näher erläutern. Es zeigen
- **Figur 1:**: Umsatzkurven für Propen, NOₓ und CO in Abhängigkeit von der Abgastemperatur für frische Katalysatoren
- **Figur 2:**: Umsatzkurven für Propen, NOₓ und CO in Abhangigkeit von der Abgastemperatur für gealterte Katalysatoren

### Vergleichsbeispiel 1:

Es wurde ein konventioneller Oxidationskatalysator (A) mit 1,77 g/l Platin auf Aluminiumsilikat hergestellt. Bei dem Aluminiumsilikat handelte es sich um Aluminiumoxid, welches mit 5 Gew.-% Siliziumdioxid stabilisiert war. Die spezifische Oberfläche diese Materials betrug 153 m²/g.

Das Aluminiumsilikat wurde durch die beschriebene Porenvolumenimprägnierung mit 1,5 Gew.-% Platin, bezogen auf das Gesamtgewicht des aktivierten Aluminiumsilikats, beladen. Als Vorläuferverbindung von Platin wurde Tetraamminplatin(II)-hydroxid verwendet. Nach dem Imprägnieren wurde das Pulvermaterial getrocknet und bei 300°C kalziniert. Danach wurde es zu einer wäßrigen Beschichtungsdispersion mit einem Feststoffanteil von 35 Gew.-% verarbeitet und auf einen Wabenkörper aus Cordierit mit einer Zelldichte von 62 cm⁻² aufgebracht. Die Beschichtung wurde zwei Stunden bei 300°C an Luft kalziniert und anschließend für die Dauer von zwei Stunden bei 500°C in einem Formiergasstrom (95 Vol.-% N₂; 5 Vol.-% H₂) reduziert.

Der fertige Katalysator enthielt 120 g/l Pt-Aluminiumsilikat und 1,77 g/l Platin.

### Beispiel 1:

Es wurde ein zweiter Katalysator (B) nach Vergleichsbeispiel 1 angefertigt und anschließend mit einer Bleiacetatlösung imprägniert. Nach dem Imprägnieren wurde der Katalysator zwei Stunden bei 100°C getrocknet, zwei Stunden bei 300°C an Luft kalziniert und abschließend zwei Stunden bei 500°C unter Formiergas reduziert.

Der fertige Katalysator enthielt Blei in einem molaren Verhältnis zu Platin von 2:1.

### Beispiel 2:

Es wurde ein dritter Katalysator (C) nach Beispiel 1 angefertigt. Das molare Verhältnis von Blei zu Platin wurde auf einen Wert von 1:1 eingestellt.

### Anwendungsbeispiel:

Die drei Katalysatoren wurden in einer Modellgasanlage mit der in Tabelle 1 aufgeführten Modellgaszusammensetzung bezüglich des Umsatzes von Kohlenmonoxid, Propen und Stickoxide vermessen. Die Gastemperatur wurde während der Messungen mit einer Rate von 15°C/min erhöht.

**Tabelle 1**

| Modellgaszusammensetzung | |
|---|---|
| Gaskomponente | Konzentration [Vol.-%] |
| Kohlenmonoxid | 0,035 |
| Propen | 0,240 |
| Stickstoffmonoxid | 0,027 |
| Wasserstoff | 0,012 |
| Kohlendioxid | 10,7 |
| Sauerstoff | 6 |
| Wasserdampf | 10 |
| Stickstoff | 72,986 |
| Schwefeldioxid | -- |

Tabelle 2 zeigt die Anspringtemperaturen T_{50%} für Kohlenmonoxid und Propen, die Temperaturen für den maximalen Stickoxidumsatz Tₘₐₓ sowie den bei dieser Temperatur gemessenen maximalen Stickoxidumsatz.

**Tabelle 2**

| Meßergebnisse | | | | |
|---|---|---|---|---|
| Katalysator | CO-Umsatz T_{50%} [°C] | Propen-Umsatz T_{50%} [°C] | NOₓ-Umsatz Tₘₐₓ [°C] | maximaler NOₓ-Umsatz [%] |
| A | 140 | 232 | 240 | 56 |
| B | 98 | 188 | 199 | 77 |
| C | 102 | 198 | 213 | 71 |

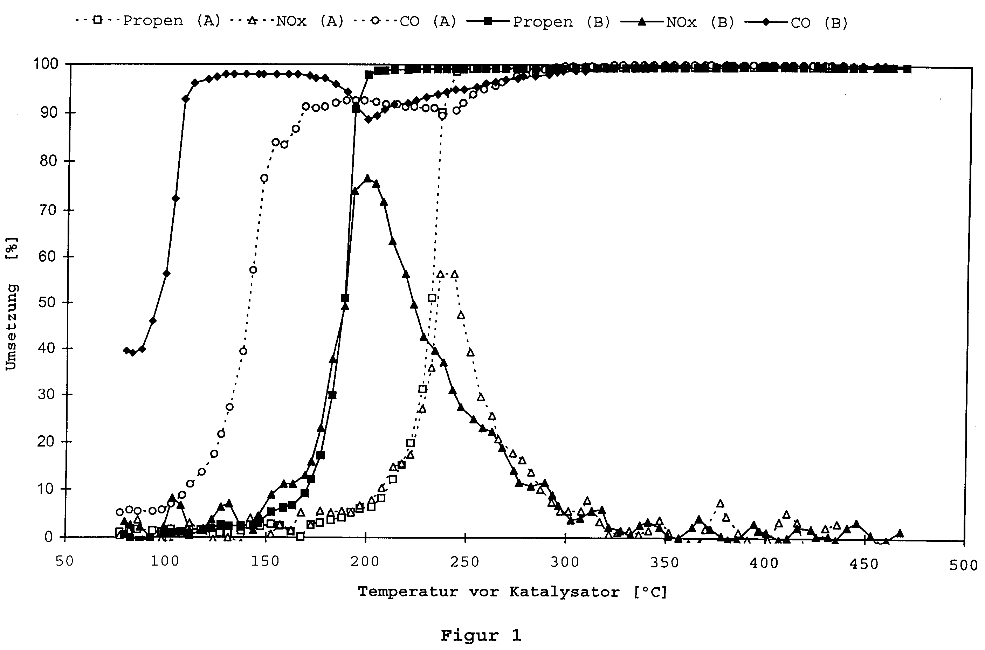

Figur 1 zeigt die Umsetzung der Komponenten Kohlenmonoxid, Propen und Stickoxid zwischen 50 und 500°C für den Vergleichskatalysator A von Vergleichsbeispiel 1 sowie für den erfindungsgemäßen Katalysator B von Beispiel 1. Es ist deutlich zu erkennen, daß der erfindungsgemäße Katalysator eine wesentlich niedrigere Anspringtemperatur als der Vergleichskatalysator aufweist und die Stickoxide wesentlich besser konvertiert.

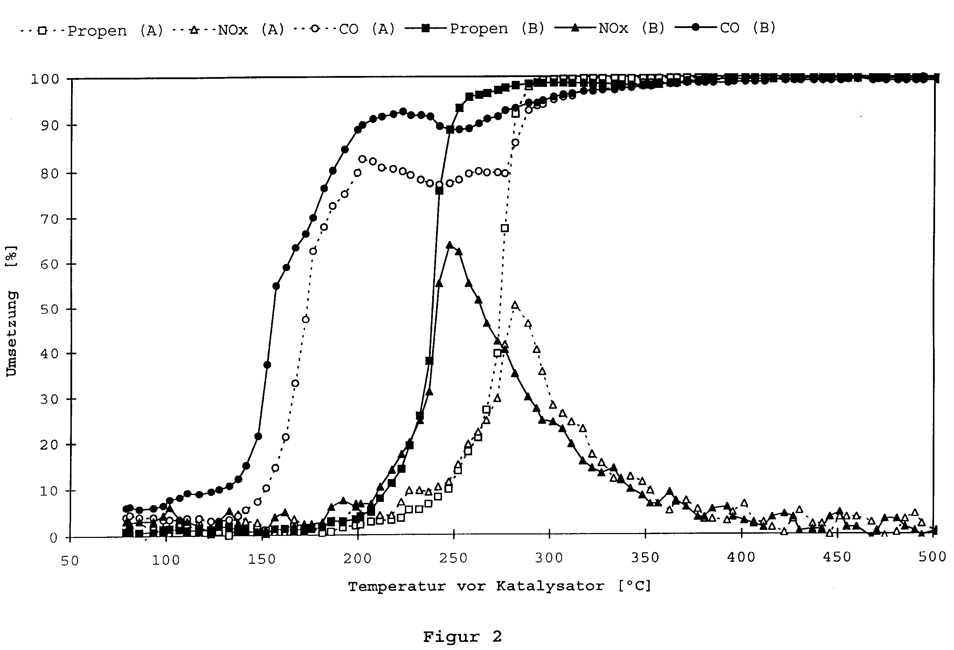

Auch nach einer sechzehnstündigen Ofen-Alterung der beiden Katalysatoren bei 750°C in einer Atmosphäre aus 10 Vol.% Wasserdampf und 90 Vol.-% Luft ist die Aktivität des Blei enthaltenden Katalysators wesentlich besser als die des bleifreien Katalysators. Die entsprechenden Umsatzkurven sind in Figur 2 dargestellt.

## Patentansprüche

1. Oxidationskatalysator, welcher auf einem feinteiligen Trägermaterial Platin enthält,
**dadurch gekennzeichnet,**
daß der Katalysator als zusätzlichen Promotor Blei in einem Molverhältnis zu Platin von 0,5:1 bis 3:1 enthält.

2. Oxidationskatalysator nach Anspruch 1,
**dadurch gekennzeichnet,**
daß er bezogen auf sein Gesamtgewicht 0,01 bis 5 Gew.-% Platin enthält.

3. Oxidationskatalysator nach Anspruch 2,
**dadurch gekennzeichnet,**
daß er als Beschichtungskatalysator auf einem inerten Tragkörper in einer Konzentration von 50 bis 600 g/l Tragkörpervolumen vorliegt.
